# EUROPEAN PATENT APPLICATION

(11) **EP 2 000 943 A1**
(43) Date of publication of application: **10.12.2008**
(21) Application number: 07738146.5
(22) Date of filing: 09.03.2007
(51) Int. Cl.: G06F 21/24, G09C 1/00, H04L 9/08, H04L 9/14

(54) **CONTENT SEARCH DEVICE**

(30) Priority: 17.03.2006 JP 2006073798
(71) Applicant: Panasonic Corporation, Kadoma-shi Osaka 571-8501 (JP)
(72) Inventor: MAEDA, Takuji c/o Matsushita Electric Industrial Co., Ltd Intellectual Property Rights Operations Company, Osaka, 540-6207 (JP); OCHI, Makoto c/o Matsushita Electric Industrial Co., Ltd Intellectual Property Rights Operations Company, Osaka 540-6207 (JP); INOUE, Shinji c/o Matsushita Electric Industrial Co., Ltd Intellectual Property Rights Operations Company, Osaka, 540-6207 (JP); FUJIMURA, Kazuya c/o Matsushita Electric Industrial Co., Ltd Intellectual Property Rights Operations Company, Osaka, 540-6207 (JP); INOUE, Yukiko c/o Matsushita Electric Industrial Co., Ltd Intellectual Property Rights Operations Company, Osaka, 540-6207 (JP); SO, Hirokazu c/o Matsushita Electric Industrial Co., Ltd Intellectual Property Rights Operations Company, Osaka, 540-6207 (JP); SUTO, Masato c/o Matsushita Electric Industrial Co., Ltd Intellectual Property Rights Operations Company, Osaka, 540-6207 (JP)
(74) Representative: Ehlers, Jochen
(86) International application number: PCT/JP2007/054661
(87) International publication number: WO 2007/119324

(57) **Abstract**

A content search device calculates the number of valid encrypted contents as comparison objects contained in encrypted content databases and the number of valid decryption keys contained in decryption key databases. The database having the smaller number is decided to be a reference database. By successively reading out entries contained in the reference database, a combination of an encrypted content and a corresponding decryption key is searched.

## Description

### Technical Field

The present invention relates to a device that accesses a recording medium which stores electronic contents of music, moving images, books, etc., to search for a desired content, and more particularly, to a device that searches for a combination of an encrypted content and a decryption key for decrypting the content.

### Background Art

For information recording media that record various digital data (hereinafter, referred to as "contents") such as music contents and moving image contents, there are a variety of types such as hard disks and optical disks. A memory card which is one of the information recording media has rapidly proliferated for use mainly in small-sized information devices such as digital still cameras and mobile phone terminals, due to its compactness and light weight.

For memory cards, there are various types depending on the different forms and specifications, and among them there is one having a copyright protection function. The memory card having a copyright protection function is capable of preventing unauthorized copying of a content having copyright and of safely recording and playing back the content. Therefore, the memory card is not only used as a recording medium for simply carrying data but is also used in a digital audio player that handles contents having copyright, resulting in wider applied use than that of conventional recording media, which contributes to the promotion of proliferation of memory cards.

An example of a copyright protection mechanism in a memory card having a copyright protection function is implemented by providing two types of recording areas (a normal area and a secret area) in the memory card (see, for example, Patent Document 1). Specifically, the memory card in this example has a secret area that can be accessed from an access device, such as a digital audio player, only by authenticating between the access device and the memory card; and a normal area that can be freely accessed from the access device regardless of whether authentication is successful or not. Then, a content (hereinafter, referred to as the "encrypted content") which is encrypted is recorded in the normal area and key data (hereinafter, referred to as the "decryption key") for decrypting the content is stored in the secret area. By thus separately storing the encrypted content and the decryption key in the two areas in the memory card, an unauthorized access device that cannot authenticate the validity with the memory card cannot acquire the decryption key stored in the secret area, and thus, cannot decrypt the encrypted content. As a result, it is possible to prohibit the use of the content.

Conventionally, contents to be stored in a memory card having a copyright protection function are mainly music contents ripped from a music CD purchased by a user or music contents downloaded from a content provider by using a PC or mobile phone terminal connected to the Internet with a predetermined fee paid. These contents are recorded in the memory card, and are read from the memory card and played back by an appropriate device such as a digital audio player or mobile phone terminal. In this conventional usage pattern, an encrypted content and a decryption key associated therewith are always treated as a pair.

In recent years, in addition to such a content usage pattern, a key separation type content management method, which is so-called "super-distribution type", in which an encrypted content and a decryption key associated therewith are separately delivered to the user has received attention. In the key separation type content management method, digital contents of music, motion pictures, and so on are distributed in an encrypted format to the user through a package medium such as a CD or the Internet, while decryption keys are separately distributed from a content provider by the user who has paid a necessary fee. As such, the delivered encrypted content and decryption key do not necessarily need to be stored in the same recording medium. For example, encrypted contents may be stored in a large-capacity hard disk in a PC and decryption keys may be stored in a memory card, and upon playback they may be used in a manner such that the memory card is connected to the PC.

Hence, in the conventional pattern, when playing back contents outside the home, both encrypted contents and decryption keys need to be taken out with them recorded in a memory card. Contrary to this, in the "super-distribution type", the user can play back and enjoy encrypted contents stored in an arbitrary PC outside the home only by carrying around a memory card storing decryption keys, increasing convenience. Furthermore, in this case, there are various advantages such as that it is possible to safely distribute encrypted contents to the user by using a relatively inexpensive package medium, and since large-volume encrypted contents are distributed to the user in advance information to be newly distributed to the user upon purchase of contents is low-volume data such as decryption keys. Accordingly, this has received attention mainly from content providers for delivering contents, and its commercialization is proceeding.

In the key separation type content management method, upon recording or playing back an encrypted content, it needs to associate a decryption key with the encrypted content. As one of methods for associating, there is a method to assign uniquely identifiable ID information to both a decryption key and an encrypted content and to use the ID information of the two as an index. Patent Document 2 discloses a method in which unique ID information is assigned to a decryption key and an encrypted content such as those described above, the decryption key and the encrypted content are stored and managed in different locations, and when decrypting the encrypted content the ID information is used as an index.
* Patent Document 1: Japanese Patent No. 3389186
* Patent Document 2: JP 2003-30056 A

### Disclosure of Invention

### Problems to be Solved by the Invention

In the key separation type content management method, upon playing back contents, an encrypted content and a decryption key associated therewith need to be present together. Therefore, when a list of playable contents is displayed in order to select a content to be played back prior to the playback, it needs to search for a relationship between an encrypted content and a decryption key associated therewith and identify and display contents having both of them. However, in the key separation type content management method, the number of encrypted contents is not always the same as the number of decryption keys; therefore, when a large number of unnecessary encrypted contents or decryption keys are included, the relationship search takes a tremendous amount of time, causing a problem that it takes time to display the list.

The present invention is made in view of the above-described problem and an object of the present invention is therefore to provide a content search device capable of rapidly performing a search for a combination (relationship) of an encrypted content and a decryption key even when there is a difference between the number of encrypted contents and the number of decryption keys.

### Means for Solving the Problems

In a first aspect of the present invention, a content search device is provided that searches for a combination (correspondence relation) of an encrypted content which is obtained by encrypting content data and a decryption key which is key information for decrypting the encrypted content.

The content search device includes a reference DB determining unit and an ID comparing unit.

The reference DB determining unit accesses an encrypted content database which is a database storing the encrypted content, and a decryption key database which is a database storing the decryption key, calculates the number of encrypted contents included in the encrypted content database and satisfying a predetermined condition, and the number of decryption keys included in the decryption key database and satisfying a predetermined condition, and determines, as a reference database, one of the encrypted content database and the decryption key database, which has the lesser calculated number than other.

The ID comparing unit searches for a combination of an encrypted content and a decryption key associated therewith, while sequentially reading entries included in the reference database.

Both the encrypted content and the decryption key may include identification information for uniquely identifying the content data. The ID comparing unit may search for a combination of an encrypted content and a decryption key associated therewith, through the identification information.

The predetermined condition may be a condition satisfied by all encrypted contents included in the encrypted content database and all decryption keys included in the decryption key database.

The encrypted content and the decryption key may have a content type indicating a type of content, as an attribute. The predetermined condition may be to have the same type as a type of content which is a search target.

Both the encrypted content and the decryption key may include identification information for uniquely identifying the content data. The identification information may include information indicating a type of content.

Both the encrypted content and the decryption key may include identification information for uniquely identifying the content data. The encrypted content and the decryption key may include information indicating a type of content as information independent of the identification information.

The ID comparing unit may sequentially refer to information on encrypted contents or decryption keys in one of the encrypted content database and the decryption key database, that is determined as the reference database, to determine whether the associated decryption key or encrypted content is included in the other of the databases.

Both the encrypted content and the decryption key may include identification information for uniquely identifying the content data. The ID comparing unit may determine, through the identification information, whether a decryption key or encrypted content associated with an encrypted content or decryption key in the one of the databases is included in the other of the databases.

Both the encrypted content and the decryption key may include identification information for uniquely identifying the content data. At least one of the encrypted content database and the decryption key database may include sort information including results obtained by sorting entries included in the respective databases, based on the identification information.

At least one of the encrypted content database and the decryption key database may be constructed for each type of content.

At least one of the encrypted content database and the decryption key database may hold information about the number of entries included in the at least one database.

The content search device may further include a display unit. Only when both the encrypted content and the decryption key associated therewith are present, information about a content corresponding to the encrypted content may be displayed on the display unit.

At least one of the encrypted content database and the decryption key database may be constructed on a recording device provided internal or external to the content search device.

In a second aspect of the present invention, a content search device is provided that searches for a combination of an encrypted content which is obtained by encrypting content data and a decryption key which is key information for decrypting the encrypted content. The content search device includes an ID comparing unit that refers to an encrypted content database and a decryption key database based on identification information for uniquely identifying the content data, which is included in an encrypted content, compares identification information included in an encrypted content which is currently being referred to with identification information included in a decryption key which is currently being referred to, and searches for a combination of an encrypted content and a decryption key associated therewith. The encrypted content database is a database that stores encrypted contents which are sorted. The decryption key database is a database that stores decryption keys which are sorted based on identification information included in the decryption keys. When a result of the comparison is that a value of one identification information is smaller than a value of other identification information, the ID comparing unit skips entries in a database that includes the one identification information until the value of the one identification information becomes greater than or equal to the value of the other identification information.

### Effect of the Invention

According to the present invention, in the key separation type content management method, even when there is a difference between the number of encrypted contents and the number of decryption keys, it is possible to rapidly perform a search for a combination (correspondence relation) of an encrypted content and a decryption key associated therewith.

### Brief Description of Drawings

FIG. 1 is a diagram showing a configuration of a content search device in a first embodiment of the present invention.
FIG. 2 is a diagram showing exemplary content storage according to a key separation type content management method in the first embodiment of the present invention.
FIG. 3 is a diagram showing a configuration of a decryption key DB in the first embodiment of the present invention.
FIG. 4 is a diagram showing a configuration of an encrypted content DB in the first embodiment of the present invention.
FIG. 5 is a flowchart showing a content playback process in the first embodiment of the present invention.
FIG. 6 is a diagram showing exemplary display provided upon content playback process in the first embodiment of the present invention.
FIG. 7 is a flowchart showing a correspondence relation search process in the first embodiment of the present invention.
FIG. 8 is a diagram showing a configuration of a content ID in the first embodiment of the present invention.
FIG. 9 is a flowchart showing a process for calculating the number-of-encrypted contents in the first embodiment of the present invention.
FIG. 10 is a flowchart showing a process for calculating the number-of-decryption keys in the first embodiment of the present invention.
FIG. 11 is a flowchart showing an ID comparison process in the first embodiment of the present invention.
FIG. 12 is a diagram showing an example of the decryption key DB in the first embodiment of the present invention.
FIG. 13 is a diagram showing an example of the encrypted content DB in the first embodiment of the present invention.
FIG. 14 is a diagram showing an example of a valid content list in the first embodiment of the present invention.
FIG. 15 is a diagram showing another configuration of the content ID in the first embodiment of the present invention.
FIG. 16 is a diagram showing another configuration of the decryption key DB in the first embodiment of the present invention.
FIG. 17 is a diagram showing another configuration of the decryption key DB and the encrypted content DB in the first embodiment of the present invention.
FIG. 18 is a diagram showing a still another configuration of the decryption key DB and the encrypted content DB in the first embodiment of the present invention.
FIG. 19 is a diagram showing a configuration of a content search device in a second embodiment of the present invention.
FIG. 20 is a flowchart showing a correspondence relation search process in the second embodiment of the present invention.
FIG. 21 is a diagram showing an example of a decryption key DB in the second embodiment of the present invention.
FIG. 22 is a diagram showing an example of an encrypted content DB in the second embodiment of the present invention.

### Description of Reference Signs

1: CONTENT SEARCH DEVICE
2: REMOVABLE RECORDING MEDIUM
3: EXTERNAL ENCRYPTED CONTENT DB
4: EXTERNAL DECRYPTION KEY DB
11: EXTERNAL RECORDING DEVICE I/F
12: INTERNAL RECORDING DEVICE
13: REMOVABLE RECORDING MEDIUM I/F
14: DB ACCESS UNIT
15: REFERENCE DB DETERMINING UNIT
16: ID COMPARING UNIT
17: DISPLAY UNIT
21: DECRYPTION KEY DB
51: SORT FILE IN DECRYPTION KEY DB
52: DECRYPTION KEY FILE IN DECRYPTION KEY DB
53: DB MANAGEMENT FILE IN DECRYPTION KEY DB
61: SORT FILE IN ENCRYPTED CONTENT DB
62: ENCRYPTED CONTENT FILE IN ENCRYPTED CONTENT DB
63: DB MANAGEMENT FILE IN ENCRYPTED CONTENT DB
71: MENU LIST
72: AUDIO CONTENT LIST
121: ENCRYPTED CONTENT DB

### Best Mode for Carrying Out the Invention

Embodiments of the present invention will be described below with reference to the accompanying drawings.

### First Embodiment

### 1.1 Configuration

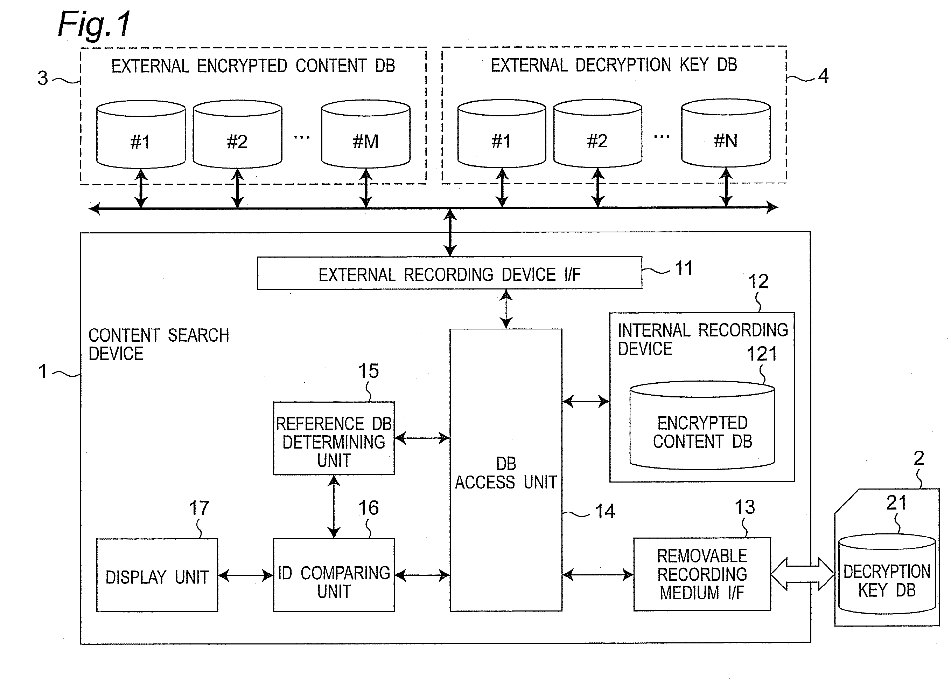

FIG. 1 is a configuration diagram of a content search device in a first embodiment of the present invention. In FIG. 1, a content search device 1 includes an external recording device interface (I/F) 11 serving as a connecting unit with a server or PC connected on a network or an external recording device, such as an external hard disk, to be connected via USB; an internal recording device 12 such as a built-in hard disk; a removable recording medium interface (I/F) 13 serving as a connecting unit with a removable recording medium 2 such as a memory card; a DB access unit 14 that accesses databases (DBs) stored in the external and internal recording devices through the corresponding I/Fs or directly to read and write information in the databases; a reference DB determining unit 15 and an ID comparing unit 16 that search for a correspondence relation (combination) between an encrypted content and a decryption key; and a display unit 17, such as a liquid crystal panel, that displays content search results, etc., to the user. The databases (DBs) manage encrypted contents and decryption keys. The display unit 17 may only have a function of generating and outputting a signal for display.

The internal recording device 12 includes an encrypted content database (DB) 121 and the removable recording medium 2 includes a decryption key database (DB) 21. Furthermore, outside the content search device 1, there are external encrypted content databases (DBs) 3 and external decryption key databases (DBs) 4 which are constructed on a server, a PC, an external hard disk, etc., connected via a network or USB. Both the encrypted content database 121 and the external encrypted content DBs 3 are databases that store and manage encrypted contents. Both the decryption key DB 21 and the external decryption key DBs 4 are databases that store and manage decryption keys. The content search device 1 in the first embodiment of the present invention obtains information on encrypted contents and decryption keys from these databases to search for a correspondence relation (combination) between an encrypted content and a decryption key associated therewith. A main process of the correspondence relation (combination) search is performed by the reference DB determining unit 15 and the ID comparing unit 16. Details of the process will be described later.

A content having copyright is stored in a recording medium in an encrypted state (encrypted content) in the end and key information (decryption key) for decrypting the content is similarly stored in a recording medium. Since the present invention assumes the use of the key separation type content management method, an encrypted content and a decryption key are distributed to the user independently of each other and thus are not necessarily stored in the same recording medium. The first embodiment of the present invention describes an example in which encrypted contents are stored in the encrypted content DB 121 constructed on the internal recording device 12 in the content search device 1 and the external encrypted content DBs 3 constructed on a recording medium external to the content search device 1. It is also assumed that decryption keys are stored in the decryption key DB 21 constructed on the removable recording medium 2 external to the content search device 1 and the external decryption key DBs 4 constructed on a recording medium external to the content search device 1.

### 1.2 Content Storage Method

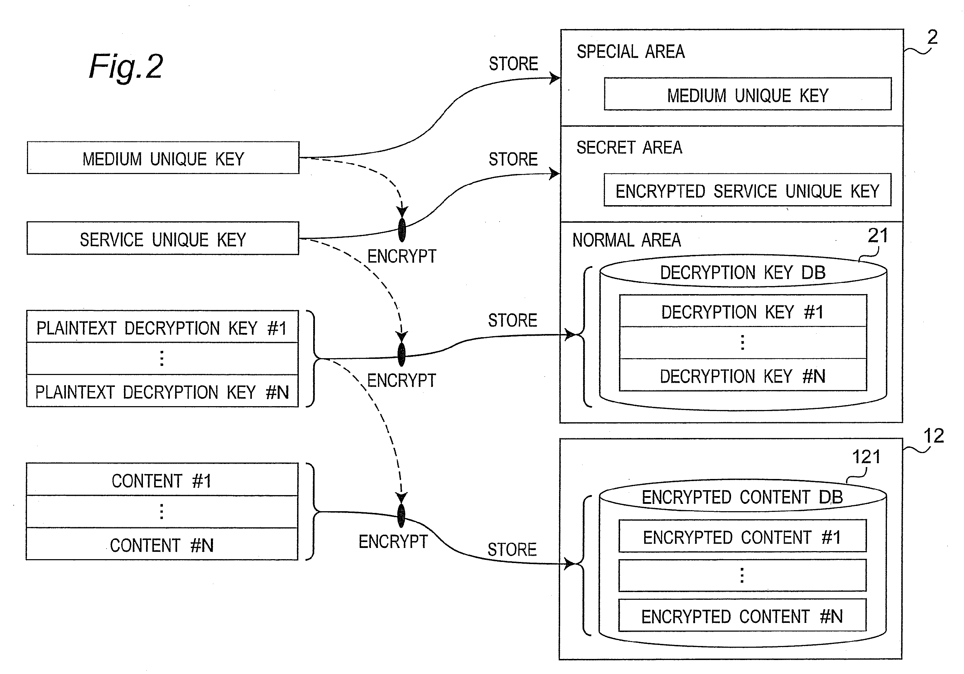

With reference to FIG. 2, a content storage method according to the key separation type content management method in the present invention is described. FIG. 2 shows an example of the case in which encrypted contents are stored in the encrypted content DB 121 and decryption keys are stored in the decryption key DB 21. Note that the encrypted contents and decryption keys stored in the encrypted content DB 121 and the decryption key DB 21 have the same configuration as those stored in the external encrypted content DB 3 and the external decryption key DB 4.

In the first embodiment of the present invention, the removable recording medium 2 that stores contents having copyright is assumed to be a removable recording medium having a special area, a secret area, and a normal area.

First, a general usage pattern of the removable recording medium will be described. The special area is a special area to/from which data cannot be written/read directly from the outside of the removable recording medium 2, storing a medium unique key which is a value unique to the removable recording medium 2, and so on. A device external to the removable recording medium 2 cannot directly read the medium unique key itself but can calculate the medium unique key based on information to be communicated in the process for authenticating between the device and the removable recording medium 2. The secret area is an area to/from which data can be written/read only when a device and the removable recording medium 2 can be authenticated as valid devices, storing key data required to decrypt a content, and so on. The normal area is an area to/from which data can be read and write can be freely performed without authentication, and stores large-volume encrypted contents, etc.

The contents are digital data, such as moving image data, still image data, music data, and book data, and are delivered via a communication network, such as the Internet or a mobile phone terminal, or stored and distributed in a package medium such as CD, MD, or DVD.

In the example of FIG. 2 based on the key separation type content management method, N contents (content #1,..., content #N) are respectively encrypted with different N plaintext decryption keys (plaintext decryption key #1,..., plaintext decryption key #N) and stored in the encrypted content DB 121 as N encrypted contents (encrypted content #1,..., encrypted content #N). The N plaintext decryption keys (plaintext decryption key #1,..., plaintext decryption key #N) are encrypted with a service unique key which is arbitrarily set, and stored in the decryption key DB 21 as N decryption keys (decryption key #1,..., decryption key #N). The service unique key is a key that varies depending on the type of each service providing contents, and so on. The service unique key is encrypted by a medium unique key which varies from removable recording medium 2 to removable recording medium 2, and stored in the secret area in the removable recording medium 2 as an encrypted service unique key. As described previously, the medium unique key is stored in the special area in the removable recording medium 2, and a device external to the removable recording medium 2 can calculate the medium unique key based on information to be transmitted and received in the process of authenticating that they are valid devices.

As such, in the key separation type content management method, the encrypted content and the decryption key required to decrypt the encrypted contents are separately managed, and thus, in order to use a content it needs to search for a correspondence relation between the two to find the right combination between an encrypted content and a decryption key.

### 1.3 Database Configuration

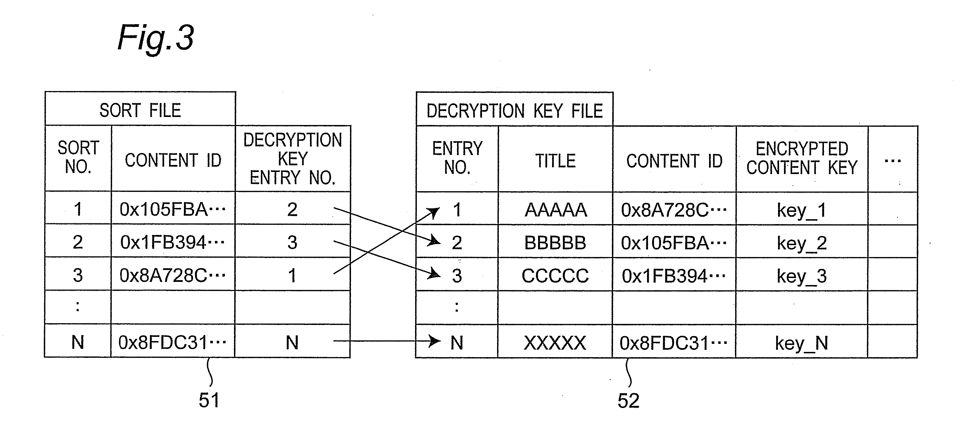

Next, with reference to FIG. 3, the configuration of the decryption key DB 21 and the external decryption key DB 4 in the first embodiment of the present invention will be described. Note that since the decryption key DB 21 and the external decryption key DB 4 have the same configuration, the configuration will be described for the decryption key DB 21, below. As shown in FIG. 3, the decryption key DB 21 includes two files: a sort file 51 and a decryption key file 52. The decryption key file 52 stores information about all decryption keys stored in the database 21. In the example of FIG. 3, N entries are stored as information on decryption keys associated with N contents. Each entry in the decryption key file 52 stores an encrypted content key (Key_1,..., Key_N) that carries, in an encrypted form, key data which is the substance of a decryption key and used for decrypting a content; a content ID (0x8A728C..., etc.) for uniquely identifying the content; a title (AAAAA,...) of the content; and the like.

The sort file 51 stores entries present in the decryption key file 52, which are sorted by content ID. The sort file 51 stores content IDs and decryption key entry Nos. which are of the same number as the total number of entries included in the decryption key file 52. The decryption key entry Nos. indicate entry numbers in the decryption key file 52 associated with their respective entries in the sort file 51. In the example of FIG. 3, the decryption key entry No. of the first entry in the sort file 51 is "2". This indicates that the first entry in the sort file 51 corresponds to the second entry in the decryption key file 52.

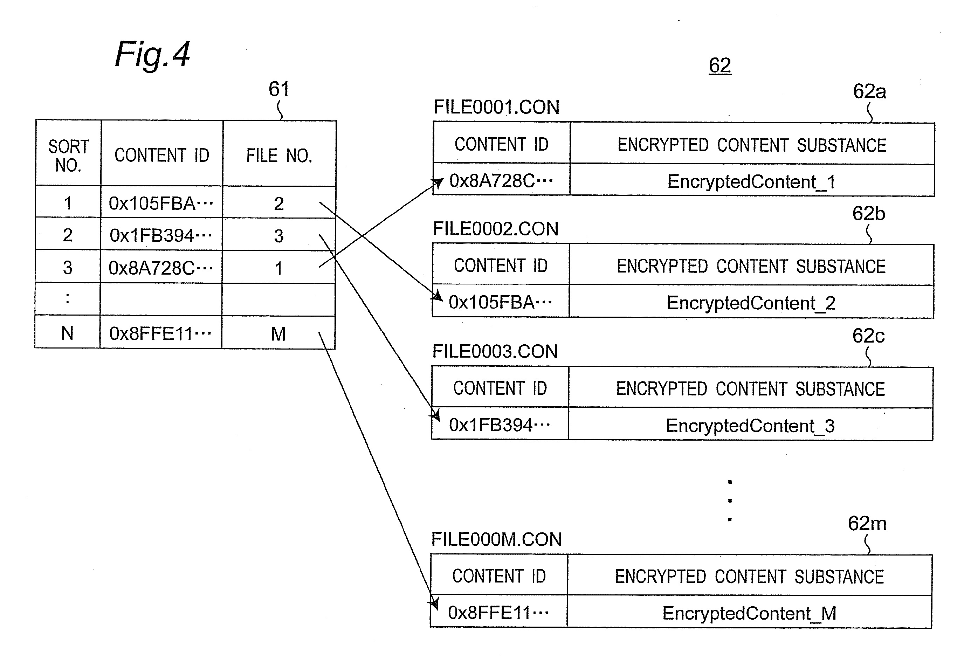

Next, with reference to FIG. 4, the configuration of the encrypted content DB 121 and the external encrypted content DB 3 in the first embodiment of the present invention will be described. Since the encrypted content DB 121 and the external encrypted content DBs 3 have the same configuration, here, the configuration will be described for the encrypted content DB 121. The encrypted content DB 121 includes a sort file 61 and encrypted content files 62a, 62b,.... Each of the encrypted content files 62a, 62b,... stores an encrypted content (EncryptedContent_1,..., EncryptedContent_M) obtained by encrypting the substance of a content; and a content ID (0x8A728C..., etc.) that uniquely identifies the encrypted content.

The example of FIG. 4 shows the case in which the encrypted content files 62a, 62b,... are created on a content-by-content basis and there are M files in total. The sort file 61 stores the encrypted content files 62 which are sorted by content ID, similar to the decryption key DB 21 and the external decryption key DB 4. The sort file 61 stores content IDs and file Nos. which are of the same number as the encrypted content files 62. The file Nos. are information that can uniquely identify the encrypted content files 62a, 62b,..., and indicate numbers which are included in file names and uniquely assigned. Here, the file name of each of the encrypted content files 62a, 62b,... is set to include a file number. In the example of FIG. 4, the file No. of the first entry in the sort file 61 is "2". This indicates that the first entry in the sort file 61 corresponds to the encrypted content file 62a named "FILE0002.CON" that includes "2" in its file name.

Note that the content IDs in the description of FIGS. 3 and 4 are information to be used commonly throughout the databases (DBs) and are IDs assigned to uniquely identify contents. In the first embodiment of the present invention, a method of rapidly searching for a pair of an encrypted content and a decryption key both having the same content ID is described.

### 1.4 Content Playback Process

In the key separation type content management method, when using contents, both encrypted content and decryption key associated therewith need to be present together. Therefore, upon playback, it needs to search for a correspondence relation between these two. Then, contents whose association has been found are displayed to the user as playable contents, the user is urged to select a content, and the selected content is played back.

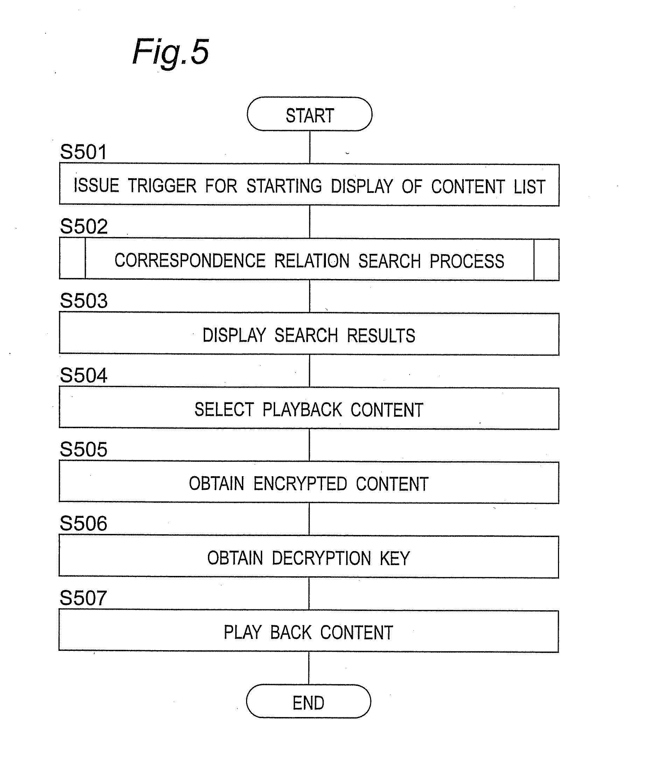

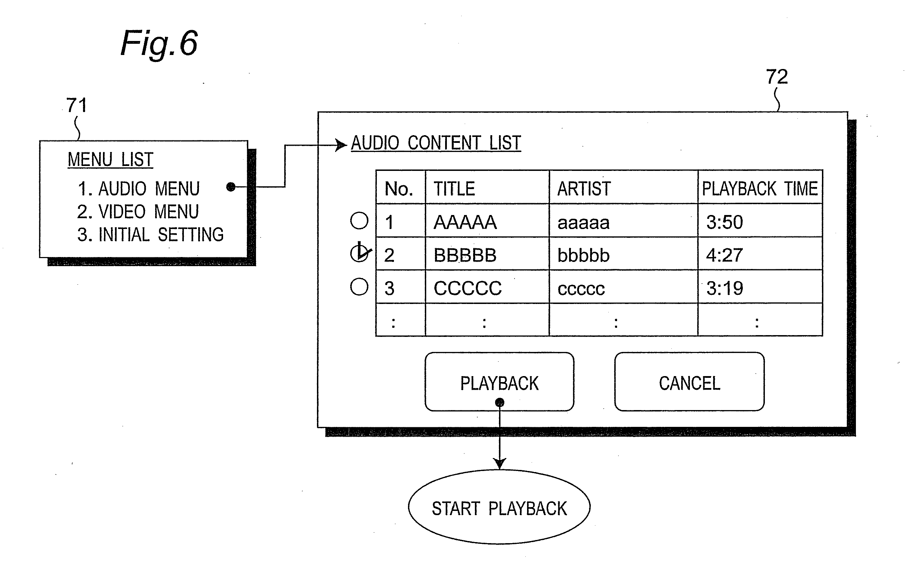

FIG. 5 is a flowchart of a content playback process of the content search device 1 in the first embodiment of the present invention. FIG. 6 is a diagram showing an example of image to be displayed on the display unit 17 of the content search device 1 in the content playback process in the first embodiment of the present invention. With reference to FIGS. 5 and 6, the content playback process of the content search device 1 in the first embodiment of the present invention will be described. Note that the following process is mainly controlled by the DB access unit 14.

In the content playback process in FIG. 5, first of all, a trigger for starting display of content list is issued (S501). When the content search device 1 is turned on, a "menu list" 71 as shown in FIG. 6, which is an initial menu is displayed. When an "Audio menu" is selected by the user in this situation, the content search device 1 (DB access unit 14) recognizes that a trigger for starting display of a content list regarding Audio contents (Audio content list 72 in FIG. 6) has been issued. Then, the reference DB determining unit 15 and the ID comparing unit 16 conduct a search process for a correspondence relation between an encrypted content and a decryption key (S502). This process will be described in detail later.

When the search process for a correspondence relation is completed, results of the search are displayed on the display unit 17 (S503). For exemplary display of the results of the search, as shown in the "Audio content list" 72 in FIG. 6, information on playable contents is displayed. Then, a content the user wants to play back is selected from the displayed contents by the user (S504). The selection is made by the user referring to the "Audio content list" 72 in FIG. 6, selecting a check box at the far left of a row displaying a content the user wants to play back, and pressing a "playback" button.

Subsequently, the DB access unit 14 accesses the encrypted content DB 121 and/or the external encrypted content DB 3 to obtain an encrypted content to be played back (S505). Also, the DB access unit 14 accesses the decryption key DB 21 and/or the external decryption key DB 4 to obtain a decryption key associated with the encrypted content to be played back (S506). Finally, the DB access unit 14 decrypts the obtained encrypted content using the obtained decryption key and plays back the content (S507).

In the above-described content playback process, particularly, in the correspondence relation search process at step S502, when a correspondence relation search is performed in a round-robin manner, such a process requires much time, and accordingly, it may take much time to display the content list, since the number of encrypted contents is not always the same as the number of decryption keys. The present embodiment provides a method allowing the correspondence relation search process to be rapid. The correspondence relation search process at step S502 in the first embodiment of the present invention will be described below.

### 1.5 Correspondence Relation Search Process

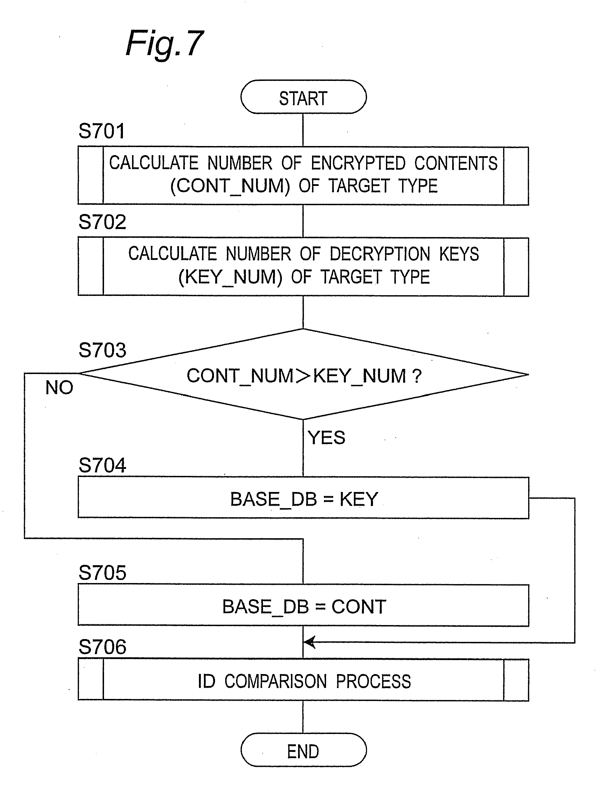

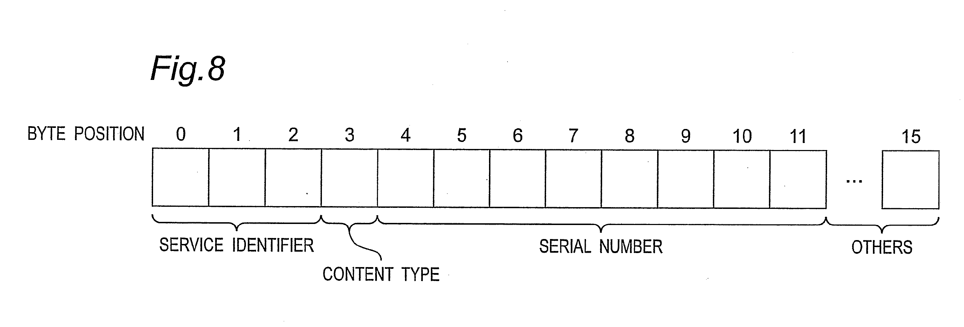

FIG. 7 is a flowchart of the correspondence relation search process (S502) in the first embodiment of the present invention. In the correspondence relation search process, first of all, the reference DB determining unit 15 calculates the number of encrypted contents (CONT_NUM) of a target type (S701). The target type refers to a type of content which is a target to be searched, such as Audio or Video. This is specified by the user. In the first embodiment, content type determination can be performed using part of content ID. Specifically, the content ID has a configuration as shown in FIG. 8, and one byte present in the fourth byte position from the beginning indicates a content type. For example, the value of the one byte being 0x01 indicates an "Audio" content and 0x02 indicates a "Video" content. That is, in the process at step S701, the content type is determined by referring to information on a content type which is included in content ID. Then, the number of encrypted contents of which content type is equal to the target type is calculated.

Then, as with step S701, the reference DB determining unit 15 calculates the number of decryption keys (KEY_NUM) for the contents having a type equal to the target type (S702). Then, the reference DB determining unit 15 compares the number of encrypted contents (CONT_NUM) with the number of decryption keys (KEY_NUM) (S703). If CONT_NUM is larger, then the database (s) 4 or 21 that store(s) decryption keys is(are) selected as a database (hereinafter, referred to as the "base DB") which serves as a base (reference) of content ID comparison. At this time, "KEY" is set to the variable BASE_DB which indicates the base DB. In other case, the reference DB determining unit 15 selects, as a base DB, the database 3 or 12 that store(s) encrypted contents (S705). At this time, "CONT" is set to the variable BASE_DB which indicates the base DB. Finally, the ID comparing unit 16 performs an ID comparison process between the database(s) that store(s) encrypted contents and the database(s) (KEY) that store (s) decryption keys, with reference to the database(s) selected as the base DB, to search for pairs of the encrypted content and decryption key (S706).

The processes at steps S701, S702, and S706 in the process in FIG. 7 will be described in detail.

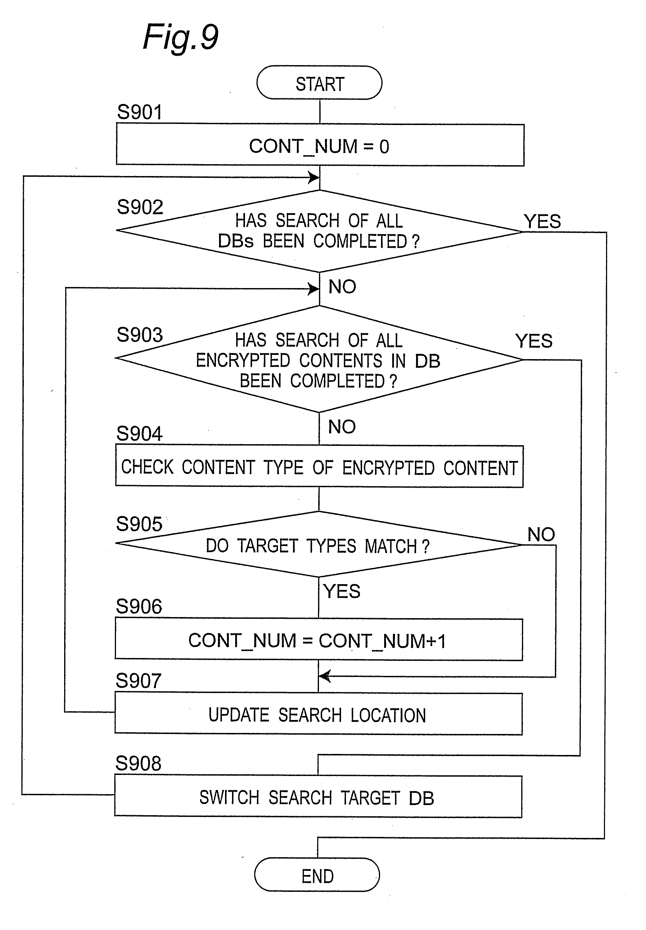

FIG. 9 is a flowchart of the calculation process of the number of encrypted contents at step S701. In this process, the DB access unit 14, first of all, initializes CONT_NUM which is a variable storing the number of encrypted contents, to 0 (S901). Then, the DB access unit 14 determines whether search process of all of the encrypted content DB 121 and the external encrypted content DBs 3 which are search targets is completed (S902). If the search is completed, then the calculation process of the number of encrypted contents ends. The calculated number of encrypted contents ends up being equal to the value of CONT_NUM.

Otherwise, if the search is not completed, then the DB access unit 14 determines whether search process of all encrypted contents included in a database which is currently being referred to is completed (S903). If the search is completed, then the search target database is switched from the current database to another database (S908) and the processing returns to the process at step S902. For example, when a search of the encrypted content DB 121 as the search target database is completed and a search of the external encrypted DBs 3 has not yet been performed, the search target database is switched from the encrypted content DB 121 to any database included in the external encrypted content DBs 3.

Otherwise, if the search is not completed at step S903, then the DB access unit 14 refers to a content ID included in an entry in the database which is currently being referred to, to check a content type (S904). Then, it determines whether the content type matches the target type (S905). In this determination process, as described in FIG. 8, the matching is done by determining whether a content type in a content ID matches a content type of current search target. If the content type matches the target type, then CONT_NUM is incremented by one (S906). Then, the search location is changed from the entry which is currently being referred to, to the next entry (S907), and the processing returns to the process at step S903.

In this manner, the number of encrypted contents of the target type included in all of the encrypted content DB 121 and the external encrypted content DBs 3 is calculated.

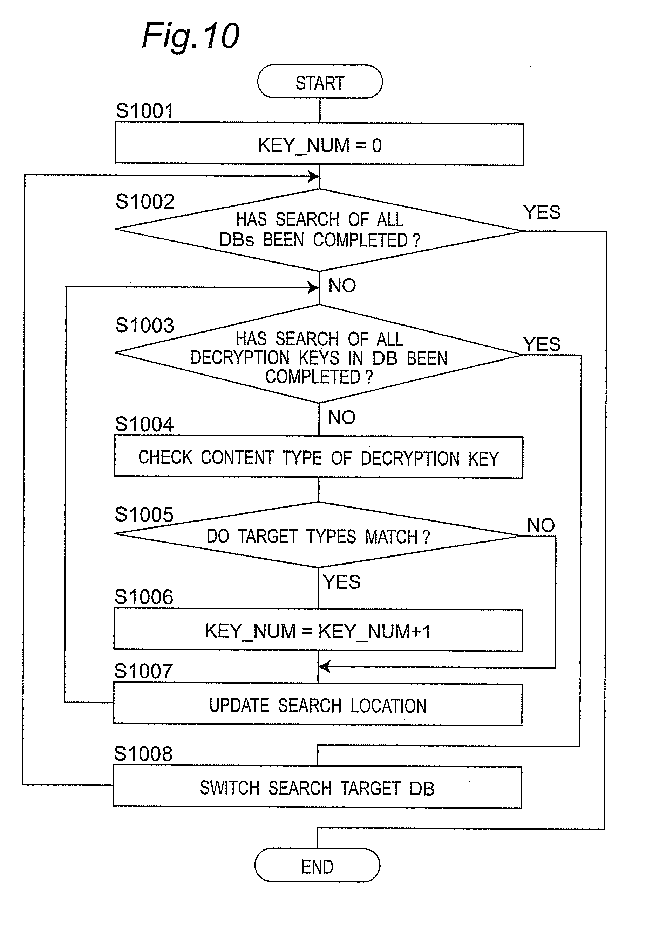

FIG. 10 is a flowchart of the calculation process of the number of decryption keys at step S702. The processing is substantially the same as the calculation process of the number of encrypted contents shown in FIG. 9. The flowchart in FIG. 10 is different from the flowchart in FIG. 9 in that the target to be calculated is not the number of encrypted contents (CONT_NUM) but is the number of decryption keys (KEY_NUM) and that the search target DB is not the encrypted content DB 121 and the external encrypted content DBs 3 but is the decryption key DB 21 and the external decryption key DBs 4. Thus, detailed description thereof is omitted.

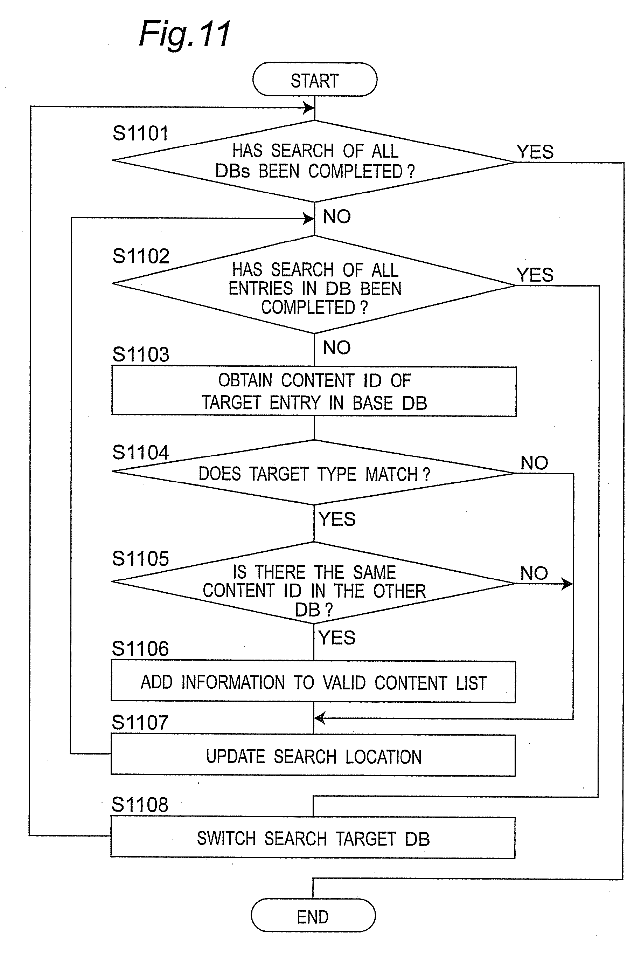

FIG. 11 is a flowchart of the ID comparison process at step S706. In the present process, the ID comparing unit 16, first of all, determines whether a search process of all databases included in a base DB (BASE_DB) as search target is completed (S1101). Here, the base DB as search target refers to the encrypted content DB 121 and the external encrypted content DBs 3 when the variable BASE_DB is "CONT", and refers to the decryption key DB 21 and the external decryption key DBs 4 when the variable BASE_DB is "KEY". If the search is completed, then the ID comparison process ends. If the search is not completed, then the ID comparing unit 16 determines whether search process of all entries included in a database which is currently being referred to is completed (S1102). If the search is completed, then the search target database is switched from the current database to another database (S1108) and the processing returns to the process at step S1101.

On the other hand, if the search is not completed in the process at step S1102, then a content ID included in an entry in a database which is currently being referred to is obtained (S1103). Then, it is determined whether it matches a content type of a current search target, with reference to the content ID obtained at step S1103 (S1104). If it matches, then with reference to the other database than the base DB, it is checked whether an entry including the content ID obtained at step S1103 is present in the other database (S1105). Here, the other database refers to the decryption key DB 21 or the external decryption key DBs 4 when the variable BASE_DB is "CONT", and refers to the encrypted content DB 121 or the external encrypted content DBs 3 when the variable BASE_DB is "KEY". If the same content ID is present, a valid content is found. Thus, information such as a database name, a decryption key entry No., and a title, is added to a valid content list (S1106). The valid content list is a list of valid contents found in the present ID comparison process. A list of valid contents included in this list is displayed in the end on the display unit 17 as a content list.

If the determinations at steps S1104 and S1105 provides "No" or if the process at step S1106 is completed, then the entry search location is changed from the entry which is currently being referred to, to the next entry (S1107) and the processing returns to the process at step S1102. By the above process, it is possible to search for a list of associated encrypted contents and decryption keys from each database and display the list on the display unit 17.

### 1.5.1 Examples of the Correspondence Relation Search Process

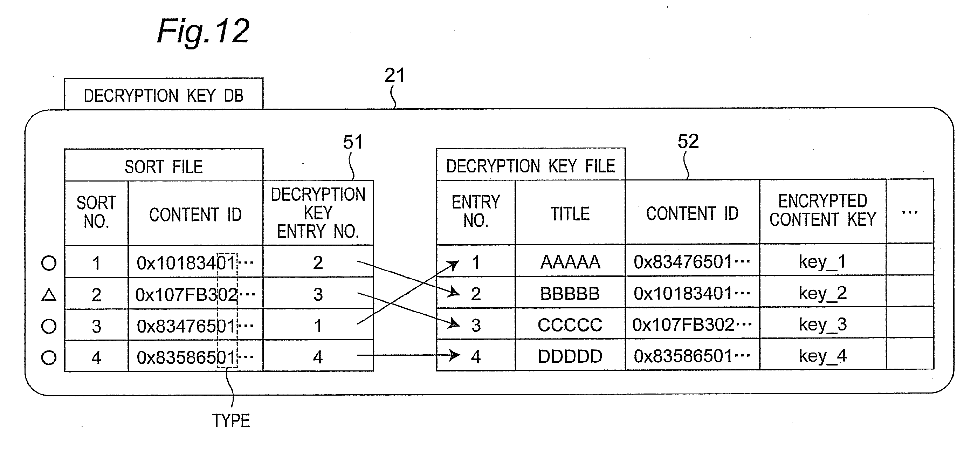

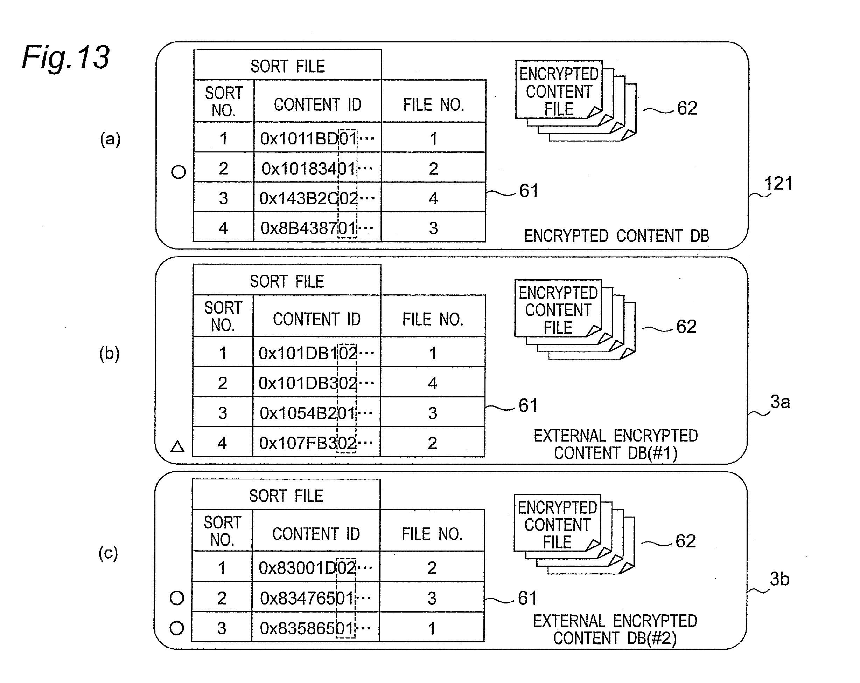

Referring to FIGS. 12 and 13, an example of the correspondence relation search process in the first embodiment of the present invention will be described. FIG. 12 shows an example in which, as a database (DB) that stores decryption keys, only the decryption key DB 21 including four entries is present. FIG. 13 shows an example in which the encrypted content DB 121 include four entries, an external encrypted content DB (#1) 3a including four entries, and an external encrypted content DB (#2) 3b including three entries are present as DBs that store encrypted contents. A circle symbol at the left end of the databases shows that an entry with the circle symbol affixed is an entry related to an audio content for which both encrypted content and decryption key exist, and a triangle symbol shows that an entry with the triangle symbol affixed is an entry related to a video content for which both encrypted content and decryption key exist. In FIGS. 12 and 13, an example of searching for 0x01 (audio content) as a target type will be described.

In this example, in the number-of-encrypted content calculation process at step S701 in FIG. 7, first of all, a calculation process is performed on the encrypted content DB 121. While sequentially referring to content IDs of all entries of sort Nos. 1 to 4, it is determined whether they match the target type. Referring to FIG. 13, for the entry of sort No. 1 included in the encrypted content DB 121, the value of the fourth byte of a content ID which indicates a type is "01" (=0x01 (Audio content)) and thus the type matches the target type, adding 1 to the value of CONT_NUM. Also, entries of sort Nos. 2 and 4 match the target type, and thus at the time of completion of a search of the encrypted content DB 121, the value of CONT_NUM reaches 3. In a likewise manner, a search is performed on the external encrypted content DB (#1) 3a and the external encrypted content DB (#2) 3b. Since the numbers of entries that match the target type are respectively one and two, at the time of completion of a search of the three databases, CONT_NUM reaches 6.

In this example (see FIG. 12), in the number-of-decryption key calculation process at step S702, while sequentially referring to content IDs of all entries of sort Nos. 1 to 4 in the decryption key DB 21, it is determined whether types included in the content IDs match the target type. By the same process as that in the example of FIG. 13, the number of entries among the entries included in this database that match the target type is three. That is, KEY_NUM is 3.

Then, in the process at step S703, comparison is made between CONT_NUM (=6) and KEY_NUM (=3). Since CONT_NUM is larger, processing proceeds to the process at step S704 where the decryption key DB is set as a base DB. Namely, BASE_DB is KEY.

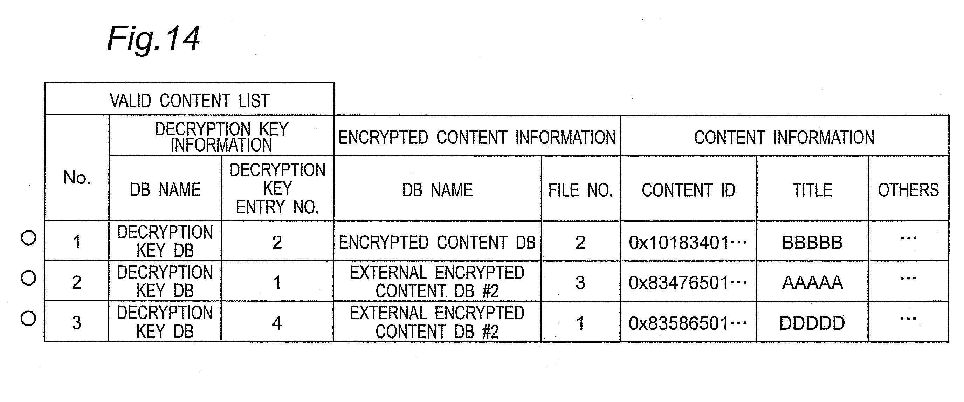

Finally, in the ID comparison process at step S706, ID comparison is performed using the database including decryption keys as the base DB. First, by referring to a content ID of an entry of sort No. 1 in the decryption key DB 21, it is compared with the target type. In the example of FIG. 12, the value of the fourth byte in the content ID is "01" (0x01, (audio content)) and therefore it is determined that the target type matches. Then, by referring to the encrypted content DB 121, the external encrypted content DB3 (#1), and the external encrypted content DB3 (#2), an entry having a content ID that matches the content ID (=0x10183401...) of the entry of sort No. 1 in the decryption key DB 21 is searched for. In the example of FIG. 13, as a result of the search, an entry of sort No. 2 in the encrypted content DB 121 has the same content ID, and thus information about this content is added to a valid content list. An example of the valid content list is shown in FIG. 14. For information about a decryption key in the valid content list, "decryption key DB" is stored as a DB (database) name and "2" is stored as a decryption key entry No. For information about an encrypted content, "encrypted content DB" is stored as a DB name and "2" is stored as a file No. Furthermore, for information about a content, "0x10183401..." is stored as a content ID and "BBBBB" is stored as a title. Note that, for information about a content, information other than the content ID and the title name is also stored.

Thereafter, the same process is sequentially performed on entries for sort Nos. 2, 3, and 4 in the decryption key DB 21. However, since a content ID of the entry of sort No. 2 does not match the target type, a search is not performed on the encrypted content DB 121 and the external encrypted content DBs 3. As a result of the above-described process, a valid content list as shown in FIG. 14 is created and information about each content is displayed on the display unit 17.

In this example, by setting, as the base DB (BASE_DB), the decryption key DB 21 (KEY) whose number of entries is less than that of the encrypted content DBs 3a, 3b, and 121, the number of loops of the comparison process at step S706 is three, enabling to more rapidly perform a correspondence relation search process than the case in which the encrypted content DBs 3a, 3b, and 121 are set as the base DB.

Setting a database with less number of entries as the base DB is effective for the case, for example, in which a binary search is performed based on sorted entries in a database to check whether there is a content ID that matches a desired content ID. When performing a binary search in the checking process at step S1105 with the number of valid entries with less number of valid entries being M and larger number of valid entries being N, the time required for a comparison process is O(Mlog₂N). From this fact, it can be understood that setting one with less number of valid entries as the base DB allows a correspondence relation search process to be performed rapidly.

The content search device 1 in the first embodiment of the present invention calculates the numbers (CONT_NUM and KEY_NUM) of entries (valid entries) of which content types match a target type in each of a database storing encrypted contents and a database storing decryption keys, sets a database with less number of valid entries as a base DB, and searches the other database for entries corresponding to respective entries included in the base DB. In this manner, filtering contents as processing targets based on content type allows a search for a correspondence relation (combination) between an encrypted content and a decryption key to be performed more rapidly. Note that the total number of entries in each of a database that stores encrypted contents and a database that stores decryption keys may be calculated and a base DB may be set based on the respective total numbers of entries.

### 1.6 Variations

The present invention has been described based on the above-described embodiment. However, needless to say, the present invention is not limited to the above-described embodiment. Any change may be made to the embodiment without departing from the spirit and scope of the present invention. Various numerical values described in the first embodiment of the present invention are an example and thus the values may be changed to other values. For example, a content ID does not necessarily need to adopt the format of FIG. 8 and the size of content ID also does not need to be 16 bytes. Note that for generation of a content ID, for example, a content ID may be generated and added when at least a plaintext decryption key and a content are encrypted into a decryption key and an encrypted content, respectively.

Although the configuration is described in which the decryption key DB 21 is disposed in the removable recording medium 2, the encrypted content DB 121 is disposed in the internal recording device 12, and other DBs are disposed in external recording devices, other configuration may be adopted. For example, the decryption key DB 21 may be present in a recording device in the content search device 1 or the external encrypted content DBs3 and the external decryption key DBs 4 may not exist.

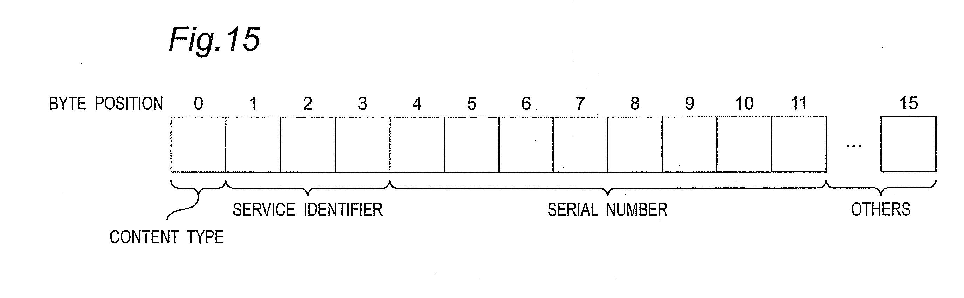

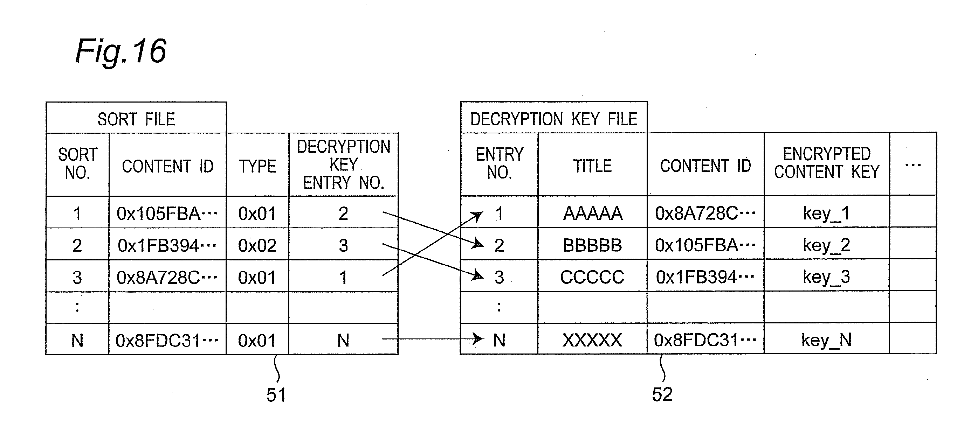

Although an example is described in which information identifying a content type is stored in the fourth byte of a content ID, the information identifying a content type may be stored in other formats. For example, when the information is stored in the beginning of the content ID as shown in FIG. 15, location at which entry of target type is stored is fixed in the sort files 51 and 61, and thus search efficiency is further improved. Alternatively, as shown in FIG. 16, in the sort files 51 and 61 in the decryption key DB 21 and the encrypted content DB 121, "type" may be stored as information independent of a content ID.

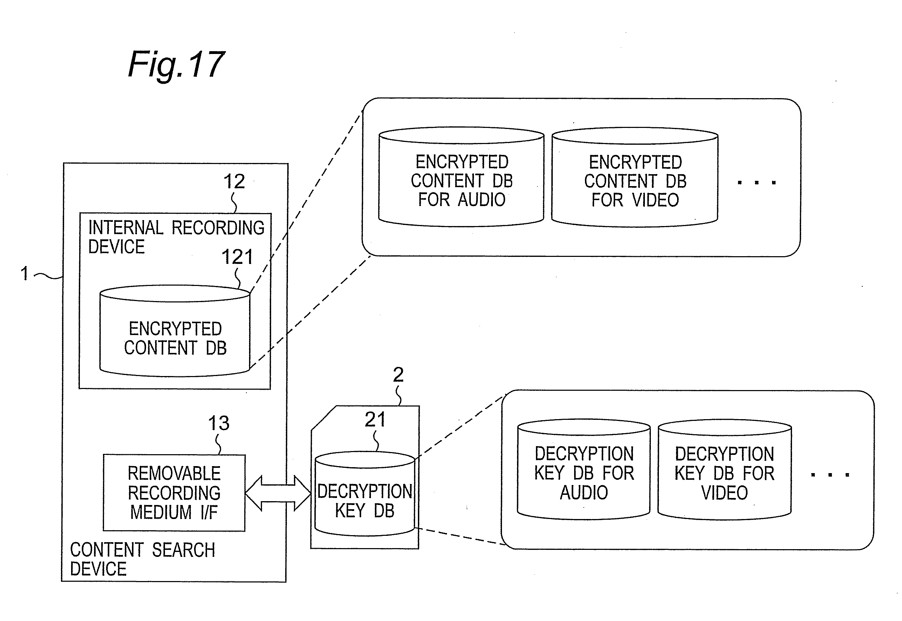

Alternatively, as shown in FIG. 17, the decryption key DB 21 and the encrypted content DB 121 may be prepared independently for each content type. For a method of making databases independent, for example, the method may includes creating and storing various types of files in a database in different directories such as a directory dedicated to Audio and a directory dedicated to Video, or creating sort files 51 and 61 in databases for each type such as "AUDIO.SOT" and "VIDEO.SOT". When databases are thus made independent, comparison for target type becomes unnecessary, improving search efficiency.

Although a method using the sort files 51 and 61 is described as an example of the key separation type content management method, the sort files 51 and 61 are not necessarily need to be used. This scheme may be applied to a configuration in which there are simply the decryption key file 52 and the encrypted content files 62.

When a large majority of encrypted contents and decryption keys included in the target DB are of a content type of the search target, if the target type check is performed in the number-of-encrypted content calculation process and the number-of-decryption key calculation process at steps S701 and S702, it may adversely extend the processing time of a correspondence relation search process. In view of this, the target type check process in the processes at steps S701 and S702 may be omitted. In this case, simply, the numbers of entries included in respective DBs are calculated as CONT_NUM and KEY_NUM, which are used in the comparison process at step S703.

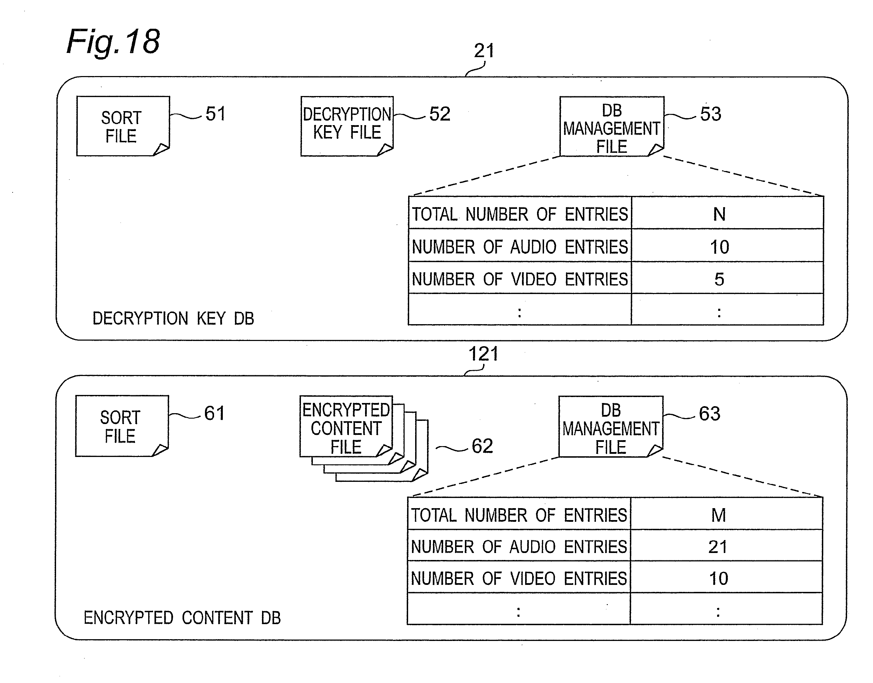

Further, the example is described in which a database does not hold information on the number of entries. However, as shown in FIG. 18, the present invention may be applied to a DB holding the numbers of entries. In this case, there is no need to search all databases to calculate values in the number-of-encrypted content calculation process and the number-of-decryption key calculation process at steps S701 and S702, and it is enough to refer to simply the number of entries held by a database needs. Thus, search efficiency is further improved. The number of entries to be held may be the number of entries for all content types or may be the number of entries for each content type.

### Second Embodiment

### 2.1 Configuration

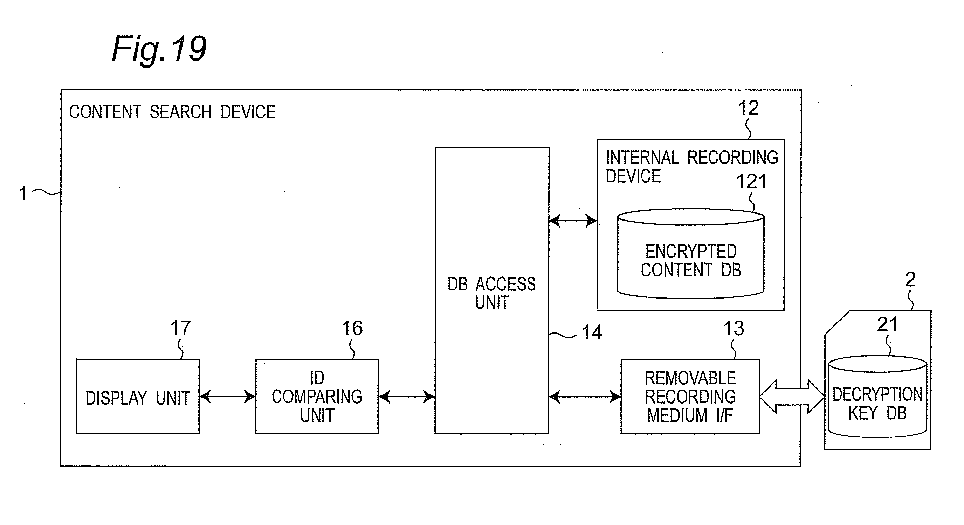

FIG. 19 is a diagram of configuration of a content search device in a second embodiment of the present invention. The configuration shown in FIG. 19 is different from the configuration shown in FIG. 1 in that the external recording device I/F 11 and the reference DB determining unit 15 are missing in the content search device 1 and that the external encrypted content DBs 3 and the external decryption key DBs 4 external to the content search device 1 are missing. That is, the second embodiment assumes that there are only two databases of a decryption key DB 21 and an encrypted content DB 121, as a database which is a search target, and does not determine a base DB. The configurations of the decryption key DB 21 and the encrypted content DB 121 are the same as those in FIGS. 3 and 4. Furthermore, the format of a content ID has the same configuration as in FIG. 8.

### 2.2 Playback Flow

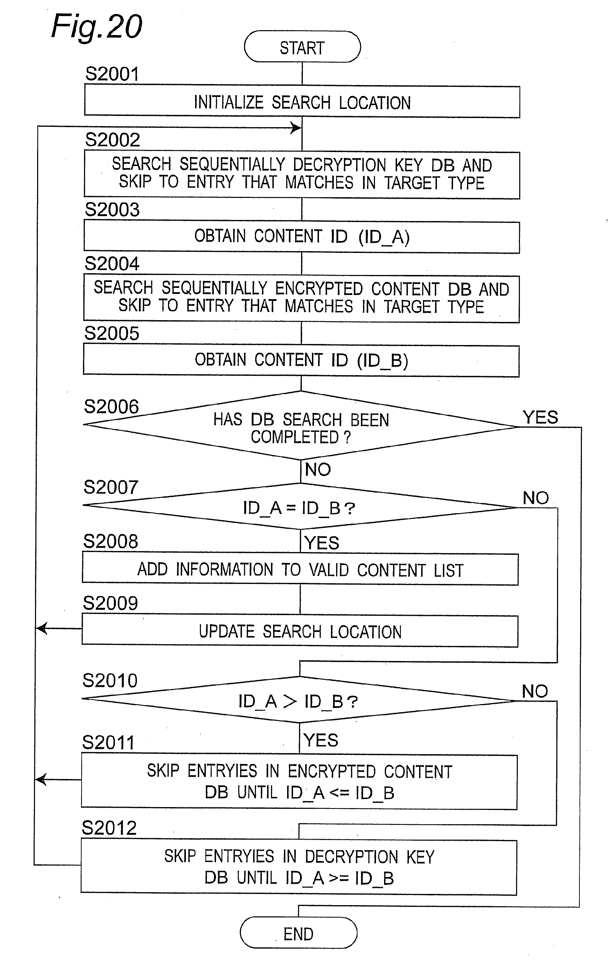

The flow of a content playback process in the second embodiment is basically the same as that shown in FIG. 5 but is different from that in the first embodiment in the correspondence relation search process at step S502. Using FIG. 20, a correspondence relation search process in the second embodiment will be described below.

### 2.3 Correspondence Relation Search Process

Referring to FIG. 20, in a correspondence relation search process in the present embodiment, first, a search location is initialized (S2001). The search location is present individually for each database. Here, KEY_POS is used as a variable indicating the search location in the decryption key DB 21 and CONT_POS is used as a variable indicating the search location in the encrypted content DB 121. At step S2001, as an initial value, "1" is set to each of KEY_POS and CONT_POS.

Then, entries in the decryption key DB 21 are sequentially referred to and a skip is made to an entry of which type matches a target type (S2002). Specifically, by referring to a sort file 51 in the decryption key DB 21, a content ID included in an entry of which sort No. has the same value as KEY_POS is obtained. When a content type included in the content ID matches a type of a current search target, the skip process ends and the processing proceeds to the next step. When the type does not match, 1 is added to KEY_POS and the same process is repeatedly performed on an entry in the sort file 51 in the decryption key DB 21, of which sort No. has the same value as KEY_POS, until an entry of which type matches is obtained.

Then, a content ID (ID_A) of an entry which is currently being referred to is obtained (S2003). Similarly, entries in the encrypted content DB 121 are sequentially referred to, entries are skipped until the target type matches, and a content ID (ID_B) is obtained (S2004 and S2005).

Then, it is determined whether a search is completed up to the end of the decryption key DB21 and encrypted content DB 121 (S2006), at this stage. If the search is completed, then the process ends. If the search is not completed, then comparison is made between ID_A and ID_B (S2007). If those values match, it means that a valid content has been found. Thus, information such as decryption key entry No. and title is added to a valid content list, 1 is added to each of KEY_POS and CONT_POS to update the search locations, and the processing returns to the process at step S2002 (S2008 and S2009).

On the other hand, if the values do not match in the process at step S2007, then a magnitude relationship between ID_A and ID_B is determined (S2010). If ID A is larger than ID_B, then entries in the encrypted content DB 121 are skipped until ID_B becomes greater than or equal to ID A (S2011), and the processing returns to the process at step S2002. Specifically, by referring to a sort file 61 in the encrypted content DB 121, content IDs are sequentially searched for, by sequentially reading a content ID from an entry of which sort No. has the same value as CONT_POS, and adding 1 to CONT_POS until CONT_POS becomes greater than or equal to ID A. Similarly, if ID_A is smaller than ID_B, entries in the decryption key DB 21 are skipped until ID_A becomes greater than or equal to ID_B (S2012) and the processing returns to the process at step S2002.

By the above process, it is possible to search for a list of associated encrypted contents and decryption keys from the decryption key DB 21 and the encrypted content DB 121 to display the list on the display unit 17.

### 2.3.1 Example of the Correspondence Relation Search Process

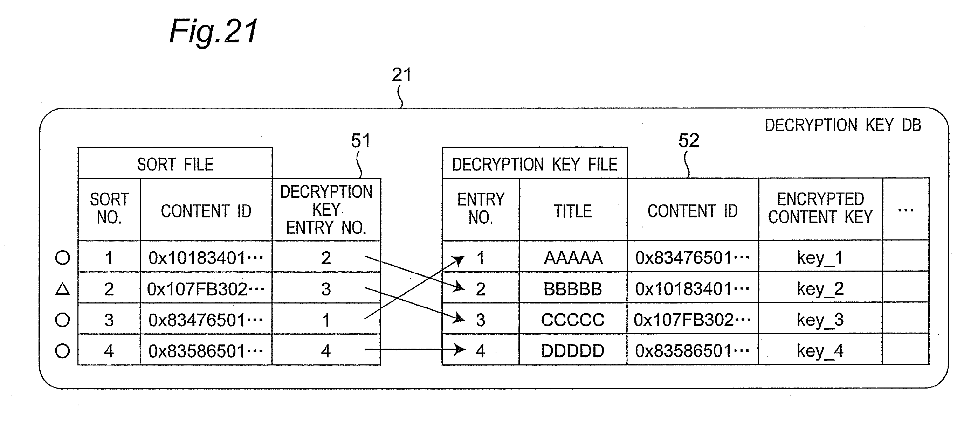

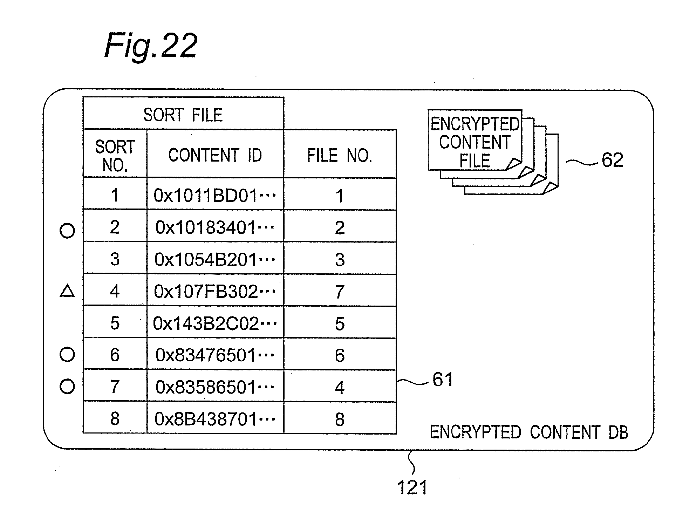

Next, with reference to FIGS. 21 and 22, an example of the correspondence relation search process in the second embodiment of the present invention will be described. FIG. 21 shows an example in which four entries are stored in the decryption key DB 21. FIG. 22 shows an example in which eight entries are stored in the encrypted content DB 121. A circle symbol at the left end of the databases shows that an entry with the circle symbol affixed is an entry related to an audio content of which encrypted content and decryption key are both present, and a triangle symbol shows that an entry with the triangle symbol affixed is an entry related to a video content of which encrypted content and decryption key are both present. Here, in the examples of FIGS. 21 and 22, an example of searching for 0x01 (audio content) as a target type will be described.

In a correspondence relation search process in this example, first, the target type is checked by referring to a content ID of an entry for sort No. 1 in a sort file 51 in the decryption key DB 21. Referring to FIG. 21, in the decryption key DB 21 the value of the fourth byte of the content ID of the entry of sort No. 1 in the sort file 51 is "01" (=0x01 (audio content)). It is therefore determined that the target type matches, and the content ID (=0x10183401...) is obtained as "ID_A".

Then, the target type is checked by referring to a content ID of an entry for sort No. 1 in the encrypted content DB 121. Referring to FIG. 22, in the encrypted content DB 121 the value of the fourth byte of the content ID of the entry for sort No. 1 is "01" (=0x01 (audio content)). It is therefore determined that the target type matches, and the content ID (=0x1011BD01...) is obtained as ID_B.

Then, comparing ID A with ID_B, ID A is larger. Thus 1 is added to CONT_POS, and a search is performed on each entry in a sort file 61 in the encrypted content DB 121. The search is repeatedly performed until the content ID becomes greater than or equal to ID_A. Specifically, at the point when CONT_POS=2 the content ID is the same as ID_A, and thus the skipping is stopped and the processing moves to the target type determination. Since the content types of ID A and ID_B (=0x10183401...) are both "01" (=0x01) and the values of the two match, it is determined that a valid content has been able to be obtained and thus information about this content is added to a valid content list.

Then, KEY_POS and CONT_POS are updated such that KEY_POS=2 and CONT_POS=3, the processing returns to near the beginning of the processing loop to continue the process. Referring to FIG. 21, the fourth byte of a content ID (0x107FB302...) of an entry corresponding to KEY_POS=2 is "02" and it is different from the target type, and thus the entry is skipped. Since a type of a content ID (=0x83476501...) included in an entry corresponding to KEY_POS=3 matches, the content ID is obtained as ID_A.

Referring to FIG. 22, since a content ID of an entry corresponding to CONT_POS=3 is 0x1054B201... and thus the target type matches, the content ID is obtained as ID_B.

Then, comparing ID A with ID_B, ID A is larger. Thus 1 is added to CONT_POS, and a search is performed on each entry in the sort file 61 in the encrypted content DB 121. The search is repeatedly performed until the content ID becomes greater than or equal to ID A. Specifically, entries are skipped until CONT_POS becomes 6, and the content ID (=0x83476501...) for CONT_POS=6 is obtained as ID_B. The content types of ID_A and ID_B (=0x83476501...) are both 0x01 (audio content) and the values of the two match. It is therefore determined that a valid content has been obtained and thus information about this content is added to the valid content list.

Then, KEY_POS and CONT_POS are updated such that KEY_POS=4 and CONT_POS=7, the processing returns to near the beginning of the processing loop, and the process continues. Referring to FIG. 21, a content ID of an entry corresponding to KEY_POS=4 is 0x83586501... and the target type matches, and thus the content ID is obtained as ID A. Referring to FIG. 22, since a content ID of an entry corresponding to CONT_POS=7 is 0x83586501... and the target type matches, and thus the content ID is obtained as ID_B. Since the content types of ID_A and ID_B (=0x83586501...) are both 0x01 (audio content) and the values of the two match, it is determined that an effective content has been able to be obtained and thus information about this content is added to the valid content list.

Then, KEY_POS and CONT_POS are updated such that KEY_POS=5 and CONT_POS=8, the processing returns to near the beginning of the processing loop to continue the process. However, since in the decryption key DB 21 a search of all entries is already completed, the information stored in the valid content list is displayed on the display unit 17 and the process ends.

As described above, the content search device 1 in the second embodiment of the present invention searches for pieces of information on encrypted contents and decryption keys which are respectively sorted and stored in the encrypted content DB 121 and the decryption key DB 21. To search for a correspondence relation (combination) between the encrypted content and decryption key, the content search device 1 compares a content ID of an encrypted content with a content ID of a decryption key which are currently being referred to, and skips an entry (or entries) in the DB until a smaller value becomes a larger value. In this manner, wasteful ID comparison is eliminated, enabling to rapidly search for a correspondence relation search between an encrypted content and a decryption key.

### 2.4 Variations

The present invention has been described based on the above-described embodiment. However, needless to say, the present invention is not limited to the above-described embodiment. Any change may be made to the embodiment without departing from the spirit and scope of the present invention. Various numerical values described in the second embodiment of the present invention are an example and thus the values may be changed to other values. For example, a content ID does not necessarily need to adopt the format of FIG. 8 and the size thereof also does not need to be 16 bytes.

Although the configuration is described in which the decryption key DB 21 is disposed in the removable recording medium 2, the encrypted content DB 121 is disposed in the internal recording device 12, other configurations may be adopted. For example, the decryption key DB 21 may be present in a recording device in the content search device 1.

Although an example is described in which information identifying a content type is stored in the fourth byte of a content ID, the information may be stored in other formats. For example, when the information is stored in the beginning of the content ID as shown in FIG. 15, location at which entry of a target type is stored is fixed in the sort files 51 and 61, and search efficiency is further improved. Alternatively, as shown in FIG. 16, in the sort files 51 and 61 in the decryption key DB 21 and the encrypted content DB 121, "type" may be stored as information independent of a content ID.

Alternatively, as shown in FIG. 17, the decryption key DB 21 and the encrypted content DB 121 may be prepared independently for each content type. For a method of making databases independent, for example, the method may includes creating and storing various types of files in a database in different directories such as a directory dedicated to Audio and a directory dedicated to Video, or creating sort files 51 and 61 in databases for each type such as "AUDIO.SOT" and "VIDEO.SOT". When databases are thus made independent, comparison for a target type becomes unnecessary, improving search efficiency.

Although an example is described in which a database does not hold the number of entries as shown in FIG. 18, the present invention may be applied to a DB holding the numbers of entries. The number of entries to be held may be the number of entries for all content types or may be the number of entries for each content type.

### Industrial Applicability

When a content search device according to the present invention searches for a correspondence relation between a encrypted content and a decryption key which are managed in the key separation type content management method, the content search device compares IDs based on ID with less number of valid entries. By this, it becomes possible to rapidly search for a correspondence relation (combination) between the encrypted content and decryption key. Such a content search device can be used as a PC application, a DVD recorder, an HDD recorder, a digital audio player, a digital television, a digital still camera, or the like, that supports the key separation type content management method.

## Claims

1. A content search device that searches for a combination of an encrypted content which is obtained by encrypting content data and a decryption key which is key information for decrypting the encrypted content, the content search device comprising:
a reference DB determining unit; and
an ID comparing unit,
wherein
the reference DB determining unit
accesses an encrypted content database which is a database storing the encrypted content, and a decryption key database which is a database storing the decryption key,
calculates the number of encrypted contents included in the encrypted content database and satisfying a predetermined condition, and the number of decryption keys included in the decryption key database and satisfying a predetermined condition, and
determines, as a reference database, one of the encrypted content database and the decryption key database, which has the lesser calculated number than other, and
the ID comparing unit searches for a combination of an encrypted content and a decryption key associated therewith, while sequentially reading entries included in the reference database.

2. The content search device according to claim 1, wherein
both the encrypted content and the decryption key include identification information for uniquely identifying the content data, and
the ID comparing unit searches for a combination of an encrypted content and a decryption key associated therewith, through the identification information.

3. The content search device according to claim 1, wherein the predetermined condition is a condition satisfied by all encrypted contents included in the encrypted content database and all decryption keys included in the decryption key database.

4. The content search device according to claim 1, wherein
the encrypted content and the decryption key have a content type indicating a type of content, as an attribute, and
the predetermined condition is to have the same type as a type of content which is a search target.

5. The content search device according to claim 4, wherein
both the encrypted content and the decryption key include identification information for uniquely identifying the content data, and
the identification information includes information indicating a type of content.

6. The content search device according to claim 4, wherein
both the encrypted content and the decryption key include identification information for uniquely identifying the content data, and
the encrypted content and the decryption key include information indicating a type of content as information independent of the identification information.

7. The content search device according to claim 1, wherein the ID comparing unit sequentially refers to information on encrypted contents or decryption keys in one of the encrypted content database and the decryption key database, that is determined as the reference database, to determine whether the associated decryption key or encrypted content is included in the other of the databases.

8. The content search device according to claim 7, wherein
both the encrypted content and the decryption key include identification information for uniquely identifying the content data, and
the ID comparing unit determines, through the identification information, whether a decryption key or encrypted content associated with an encrypted content or decryption key in the one of the databases is included in the other of the databases.

9. The content search device according to claim 1, wherein
both the encrypted content and the decryption key include identification information for uniquely identifying the content data, and
at least one of the encrypted content database and the decryption key database includes sort information including results obtained by sorting entries included in the respective databases, based on the identification information.

10. The content search device according to claim 1, wherein at least one of the encrypted content database and the decryption key database is constructed for each type of content.

11. The content search device according to claim 1, wherein at least one of the encrypted content database and the decryption key database holds information about the number of entries included in the at least one database.

12. The content search device according to claim 1 further comprising a display unit, wherein only when both the encrypted content and the decryption key associated therewith are present, information about a content corresponding to the encrypted content is displayed on the display unit.

13. The content search device according to claim 1, wherein at least one of the encrypted content database and the decryption key database is constructed on a recording device provided internal or external to the content search device.

14. A content search device that searches for a combination of an encrypted content which is obtained by encrypting content data and a decryption key which is key information for decrypting the encrypted content, the content search device comprising:
an ID comparing unit that refers to an encrypted content database and a decryption key database based on identification information for uniquely identifying the content data, which is included in an encrypted content, compares identification information included in an encrypted content which is currently being referred to with identification information included in a decryption key which is currently being referred to, and searches for a combination of an encrypted content and a decryption key associated therewith, wherein
the encrypted content database is a database that stores encrypted contents which are sorted, and the decryption key database is a database that stores decryption keys which are sorted based on identification information included in the decryption keys, and
when a result of the comparison is that a value of one identification information is smaller than a value of other identification information, the ID comparing unit skips entries in a database that includes the one identification information until the value of the one identification information becomes greater than or equal to the value of the other identification information.
